# EUROPEAN PATENT SPECIFICATION

(11) **EP 3 483 600 B1**
(45) Date of publication and mention of the grant of the patent: **07.10.2026**
(21) Application number: 16908193.2
(22) Date of filing: 08.07.2016
(51) Int. Cl.: G01N 27/62, G01N 30/72, G01N 30/86

(54) **DATA PROCESSING DEVICE FOR CHROMATOGRAPH MASS ANALYSIS**
DATENVERARBEITUNGSVORRICHTUNG FÜR CHROMATOGRAFISCHE MASSENANALYSE
DISPOSITIF DE TRAITEMENT DE DONNÉES PERMETTANT UNE ANALYSE CHROMATOGRAPHIQUE DE MASSE

(43) Date of publication of application: 15.05.2019
(73) Proprietor: Shimadzu Corporation, Kyoto-shi, Kyoto 604-8511 (JP)
(72) Inventor: KUDO, Yukihiko, Kyoto-shi Kyoto 604-8511 (JP)
(74) Representative: Mewburn Ellis LLP
(86) International application number: PCT/JP2016/070300
(87) International publication number: WO 2018/008149

(56) References cited:
- EP-A1- 3 043 175
- WO-A1-2014/076529
- WO-A1-2015/033397
- WO-A1-2015/166845
- WO-A2-2005/079261
- JP-A- 2005 331 421
- JP-A- 2016 095 253
- JP-A- H0 943 199
- JP-A- H0 943 199
- US-A1- 2005 258 355

## Description

### TECHNICAL FIELD

The present invention relates to a data processing device for chromatograph mass spectrometer that processes data collected by a chromatograph mass spectrometer, such as a gas chromatograph mass spectrometer (GC-MS) configured by a combination of a gas chromatograph (GC) and a mass spectrometer or a liquid chromatograph mass spectrometer (LC-MS) configured by a combination of a liquid chromatograph (LC) and a mass spectrometer.

### BACKGROUND ART

In a test for a blood level for a drug or screening of urine metabolite, simultaneous multi-component analysis is often conducted by using a chromatograph mass spectrometer. In such an analysis, data of a lot of compounds possibly included in samples is stored in a database (a compound table) in advance, and it is determined whether a compound stored in the database is included in the sample of blood or urine, based on data obtained by conducting scanning measurement (or selected ion monitoring (SIM) measurement or multiple reaction monitoring (MRM) measurement at mass-to-charge ratios listed stored in the compound table) on a target sample in the GC-MS or the LC-MS. When any compound stored in the database is included, quantification of the compound is conducted further according to requirement.

As one example, a procedure for identifying a compound in a target sample based on the data obtained by the scanning measurement in the GC-MS will be simply described. It is supposed here that, the following data set is already stored in the database for each of compounds including those that may be included in the sample: a retention time (hereinafter, the retention time stored in the database is referred to as a "set retention time"), a standard mass spectrum, mass-to-charge ratios of a quantitative ion and a confirmation ion, and a reference value (hereinafter, a "confirmation ion ratio reference value") for a confirmation ion ratio (a peak area ratio or a peak height ratio of the quantitative ion and the confirmation ion).

First, the set retention time and the mass-to-charge ratios of a quantitative ion and a confirmation ion for a compound intended to be identified (hereinafter, a "target compound") are read out from the compound database. Then, based on data obtained from a target sample, mass chromatograms at the mass-to-charge ratios of the quantitative ion and the confirmation ion (extracted ion chromatograms) within a predetermined time range including the set retention time are created. A peak detection is carried out on each of the mass chromatograms, and the values of the area or the height of the detected peak is obtained. A confirmation ion ratio is calculated from the values of the peak area (or height) obtained by actual measurement, and a determination is made whether the confirmation ion ratio obtained by the actual measurement falls within a predetermined allowable range based on the confirmation ion ratio reference value read out from the compound database. Alternatively, instead of using the confirmation ion ratio, a similarity in a spectrum pattern between the mass spectrum actually measured at a peak top time of a peak detected on a mass chromatogram of the quantitative ion and a standard mass spectrum read out from the compound database is calculated, and a determination is made whether the similarity is greater than or equal to a predetermined threshold. Further, in some cases, both these determination methods are used. When criteria are satisfied, a determination is made that the peak on the mass chromatogram is a peak of the target compound (for example, see Patent Literature 1).

When no related peak is found for a certain target compound, a determination may be made that the target compound does not exist in a target sample. Therefore, by conducting the above-described data processing on all compounds stored in the compound database (or on some of them selected by an analyst), it can be determined whether each of the compounds exists or not in the sample. Note that since such a data processing operation is done to determine which peak is related to which compound, it may be called an operation for "identifying a peak as a compound".

However, when a peak on the chromatogram is identified as a certain compound by the above-described procedure, one peak actually derived from one compound is occasionally misidentified as a peak derived from a plurality of compounds. This can happen when the target sample includes different compounds in which mass-to-charge ratios of a quantitative ion and a confirmation ion are both the same, and the retention times of the compounds are close to each other. Further, such misidentification can happens when the target sample contains a compound whose mass spectrum includes peaks of mass-to-charge ratios of a quantitative ion and a confirmation ion of another compound, and the retention times of the compounds are close to each other. Such identification of one peak as the plurality of compounds is called overlapping identifications.

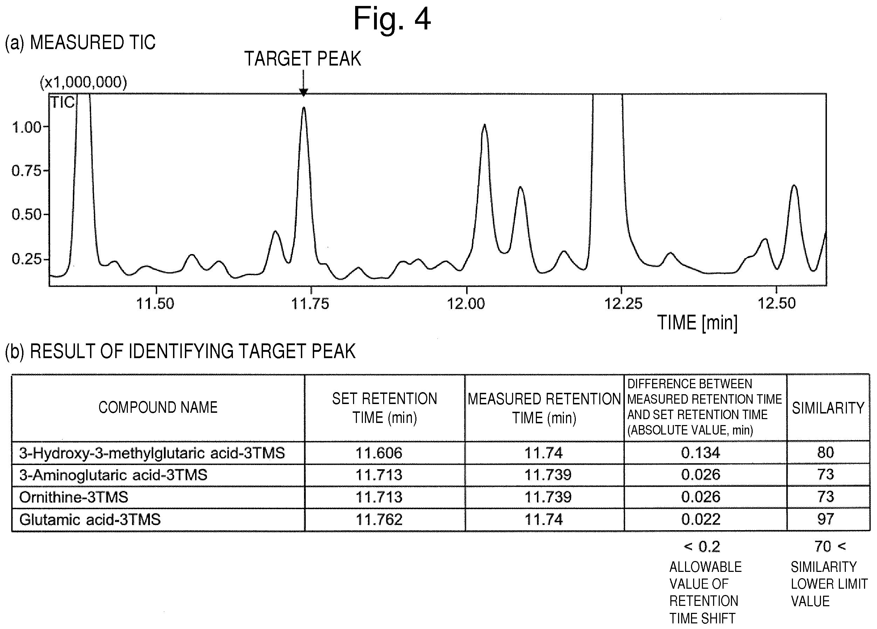

Fig. 4 illustrates an example of the overlapping identifications. Fig. 4(a) shows a chromatogram (total ion chromatogram) obtained by actual measurement. It is supposed here that, as criteria of peak identification, a tolerance in a difference between a measured retention time and a set retention time in the compound database is set to 0.2 min, and a threshold of a similarity in mass spectrum patterns is set to 70. Fig. 4(b) shows results of identification of compounds for a target peak indicated by an arrow in Fig. 4(a). Four compounds listed in the table of Fig. 4(b) are determined as compound candidates related to the target peak because these compounds all satisfy the criterion of the peak identification.

**In** simultaneous multi-component analysis, the above-described process is automatically executed on each peak on the chromatogram, and compound candidates related to each peak are determined. Whether a plurality of compound candidates are determined for a certain peak, namely, whether there are overlapping identifications, is revealed only after obtaining the results of identification of the peak. For this reason, conventionally a search is made by an analyst whether each peak has overlapping identifications one by one. When there are overlapping identifications, the analyst needs to examine the retention times, confirmation ion ratios, and similarities of the mass spectrums for a plurality of compound candidates identified for a target peak to select a most likely compound. The target peak is then identified as the selected compound. Further, an unselected compound or compounds are used to identify another peak or peaks, or are regarded as a compound that is not included in the target sample. **In** such a manner, a correcting work such as deleting results of identification is carried out.

However, in such simultaneous multi-component analysis, the number of target compounds is sometimes large (for example, hundreds or more), and the number of peaks appearing on the chromatogram is huge. For this reason, it is laborious and takes a lot of time to carry out even the work for checking whether each peak has overlapping identifications. Sometimes a peak which has overlapping identifications may be overlooked or a peak may be identified as an incorrect compound. That is, an accurate correcting work may not be carried out. Further, when there are too many overlapping identifications, a correction cannot be manually carried out. For this reason, analysis is occasionally conducted ignoring overlapping identifications, which leads to deteriorated accuracy of the analysis.
Patent application documents WO2015/033397 and EP3043175A1 describe a data processing apparatus for chromatography mass spectrometry. Patent application document JP H0943199A discloses data processing method for use in chromatography mass spectrometry.

### CITATION LIST

### PATENT LITERATURE

Patent Literature 1: JP 2011-33346 A

### SUMMARY OF INVENTION

### TECHNICAL PROBLEM

The present invention is devised in order to solve the above problems, and its object is to provide a data processing device for chromatograph mass spectrometer that can efficiently carry out, when overlapping identifications of a peak arise, a work for eliminating the overlapping identifications through an automatic data processing for identifying a peak on a chromatogram as a compound.

Another object of the present invention is to provide a data processing device for chromatograph mass spectrometer that can select, when overlapping identifications of a peak arise, an appropriate compound related to the peak, namely, identify the peak on a chromatogram as an appropriate compound while reducing time and effort of an analyst.

### SOLUTION TO PROBLEM

The present invention devised in order to solve the above problems provides a data processing device according to claim 1 herein. The claimed data processing device, is arranged for chromatography mass spectrometry to identify a compound related to a peak detected on a chromatogram created based on data obtained by repeating one of scanning measurement in a predetermined mass-to-charge ratio range, selection ion monitoring (SIM) measurement at the predetermined mass-to-charge ratio, and multiple reaction monitoring (MRM) measurement in a predetermined MRM transition for a target sample using a chromatograph mass spectrometer, the data processing device for chromatograph mass spectrometer including
a) a compound information storage unit configured to store compound information including at least one of retention times, retention indexes, mass-to-charge ratios of quantitative ions, mass-to-charge ratios of confirmation ions, confirmation ion ratios, and mass spectrums related to a measurement compound or each of measurement compounds to be determined to be contained,
b) a peak identifying unit configured to create chromatograms based on the data obtained by the measurement using the chromatograph mass spectrometer and extract the compounds related to each peak as compound candidates, based on the compound information stored in the compound information storage unit, in peaks detected on the chromatograph; and
c) an identical peak related compound candidate extracting unit configured to create a list of the compound candidates extracted by the peak identifying unit and measured peak retention times related to the compound candidates and extract a plurality of the compound candidates that are identical to each other or fall within a predetermined allowable time range for the measured peak retention times, from the list.

Herein, the chromatograph is a gas chromatograph (GC) or a liquid chromatograph (LC). Further, the mass spectrometer may be a mass spectrometer such as a normal single-type quadrupolar mass spectrometer that does not dissociate an ion, or a mass spectrometer, such as a tandem quadrupolar mass spectrometer or a so-called quadrupole time-of-flight (Q-TOF) mass spectrometer, that can conduct an MS² mass spectrograph analysis. When the mass spectrometer is the former spectrometer, the "scanning measurement" in the present invention is a simple scanning measurement. When the mass spectrometer is the latter spectrometer, the "scanning measurement" in the present invention is product ion scanning measurement in which a mass-to-charge ratio of a precursor ion is fixed. Further, normally, when the mass spectrometer is a mass spectrometer such as a normal single-type quadrupolar mass spectrometer, SIM measurement can be used instead of the scanning measurement. When the mass spectrometer is the mass spectrometer that can conduct the MS² analysis, MRM measurement can be used instead of the scanning measurement. In a case of the mass spectrometer that can conduct the MS² analysis, a mass spectrum included in the compound information may be a MS² spectrum.

In the data processing device for chromatograph mass spectrometer of the present invention, when a data processing is executed on the data collected by repeating, for example, the scanning measurement on the target sample, the peak identifying unit creates a chromatogram (a mass chromatogram or an extracted ion chromatogram) at the mass-to-charge ratio of the quantitative ion defined, for example, for each compound to be measured (measurement compound) by using the collected data, and detects a peak on the chromatogram. The peak identifying unit extracts, based on the compound information stored in the compound information storage unit for each detected peak, the compounds related to each peak as compound candidates so as to identify the peak. Since, in this case, the peak is identified based on whether the peak on the chromatogram matches with a predetermined criterion based on the compound data in the database, a peak is identified as a plurality of compounds (namely, overlapping identifications) in some cases, or a peak is not identified, namely, no component in the database is determined as to the peak in some cases.

Therefore, the identical peak related compound candidate selecting unit creates, based on the results of identification obtained by the peak identifying unit, a list of the extracted compound candidates and measured peak retention times related to the compound candidates. Then, the identical peak related compound candidate selecting unit extracts compound candidates in which the measured peak retention times are identical to each other or fall within a predetermined allowable time range from the list. Note that when any other compound candidates in which the measured peak retention times are identical to a measured peak retention time of a certain compound candidate or fall within the predetermined allowable time do not exist, one peak is related to one compound. That is, overlapping identifications do not exist, and thus such compound candidates do not have to be extracted. As a result, only compound candidates having overlapping identifications can be extracted.

The data processing device for chromatograph mass spectrometer of the present invention includes a compound candidate grouping unit that groups the compound candidates extracted by the identical peak related compound candidate extracting unit in relation to each peak. Grouped results may be put into a table in which a plurality of compound candidates are related to each group, for example.

The above table that is created by grouping performed by the compound candidate grouping unit indicates relationships between a peak having overlapping identifications and compound candidates related to the peak. Therefore, the data processing device for chromatograph mass spectrometer of the present invention further includes an information output unit that externally outputs information representing the compound candidates grouped in relation to each peak by the compound candidate grouping unit.

In this configuration, for example, an analyst confirms the information displayed on a screen of a display unit through the information output unit, and the analyst judges a most appropriate compound candidate for each peak having overlapping identifications so as to be capable of narrowing down the compound candidates or carrying out final peak identification. In this case, although the analyst needs to do a work such as judging an appropriate compound candidate and correcting the results of identification of the peak, even when a number of compounds to be measured is large or a number of peaks on the chromatogram is large, a work done by the analyst for confirming a peak having overlapping identifications is not necessary. As a result, a burden relating to the peak identification is less than in a conventional case.

Further, the present invention may provide the data processing device for chromatograph mass spectrometer,
wherein the retention times are stored as the compound information in the compound information storage unit,
the data processing device further including a compound candidate determining unit configured to compare, for each group including the plurality of compound candidates grouped by the compound candidate grouping unit and related to a single peak, absolute values in differences between the retention times stored in the compound information storage unit and measured retention times for the plurality of compound candidates included in each group, and determine a compound candidate with a smallest absolute value in the difference as a most likely compound related to a peak at which the compound candidate is extracted.

Further, the present invention may provide the data processing device for chromatograph mass spectrometer,
wherein the mass spectrums are stored as the compound information in the compound information storage unit,
the data processing device further including a compound candidate determining unit configured to calculate, for each group including the plurality of compound candidates grouped by the compound candidate grouping unit and related to a single peak, similarities between the mass spectrums for the plurality of compound candidates included in each group and measured mass spectrums in a peak top position of a chromatogram peak at which the plurality of compound candidates are extracted, and determine a compound candidate with a highest similarity as a most likely compound related to a peak at which the compound candidate is extracted.

Further, the present invention may provide the data processing device for chromatograph mass spectrometer,
wherein confirmation ion ratio reference values are stored as the compound information in the compound information storage unit,
the data processing device further including a compound candidate determining unit configured to calculate, for each groups including the plurality of compound candidates grouped by the compound candidate grouping unit and related to a single peak, absolute values in differences between the reference values of the plurality of the compound candidates included in each group and confirmation ion ratios in a peak top position of a chromatogram peak at which the plurality of compound candidates are extracted, and determine a compound candidate with a smallest absolute value in the difference as a most likely compound related to peak at which the compound candidate is extracted.

Further, the present invention may provide the data processing device for chromatograph mass spectrometer,
wherein the confirmation ion ratio reference values are stored as the compound information in the compound information storage unit,
the data processing device further including a compound candidate determining unit configured to calculate, for each group including the plurality of compound candidates grouped by the compound candidate grouping unit and related to a single peak, proportions of the reference values of the plurality of compound candidates included in each group to confirmation ion ratios in a peak top position of a chromatogram peak at which the plurality of compound candidates are extracted, and determine a compound candidate with a smallest absolute value in a difference between the proportion and 1 as a most likely compound related to a peak at which the compound candidate is extracted.

In the data processing device for chromatograph mass spectrometer according to the first to fourth aspects of the present invention, the compound candidate determining unit extracts, based on any one of the retention times, the mass spectrums, and the confirmation ion ratios, a most likely compound candidate from the plurality of compound candidates for each peak having overlapping identifications to determine the most likely compound candidate as the compound related to each peak. As a result, overlapping identifications exist, an analyst does not have to determine a most appropriate compound candidate. Thus, the peaks can be automatically identified as the likely compound candidate.

However, for example, when a plurality of compound candidates in which differences between the retention time information as the compound information and measured retention times are exactly identical to each other exist, the plurality of compound candidates may be determined as they are as the compound related to the peak. That is, one peak does not necessarily have to be identified as a certain compound.

Further, according to the above examples, two or more determinations by the compound candidate determining unit are combined, so that compound candidates related to one peak may be selected.

That is, the data processing device for chromatograph mass spectrometer of the present invention may further include;
a compound candidate determining unit configured to use at least two or more of:
a first determining process for comparing, for each group including the plurality of compound candidates grouped by the compound candidate grouping unit and related to a single peak, absolute values in differences between retention times stored in the compound information storage unit and measured retention times for the plurality of compound candidates included in each group, and determining a compound candidate with a smallest absolute value in the difference as a compound related to a peak at which the compound candidate is extracted;
a second determining process for calculating, for each group including the plurality of compound candidates grouped by the compound candidate grouping unit and related to a single peak, similarities between mass spectrums for the plurality of compound candidates included in each group and measured mass spectrums in a peak top position of a chromatogram peak at which the plurality of compound candidates are extracted, and determining a compound candidate with a highest similarity as a compound related to a peak at which the compound candidate is extracted; and
a third determining process for calculating, for each group including the plurality of compound candidates grouped by the compound candidate grouping unit and related to a single peak, absolute values for differences between the reference values of the plurality of the compound candidates included in each group and confirmation ion ratios in a peak top position of a chromatogram peak at which the plurality of compound candidates is extracted, and determining a compound candidate with a smallest absolute value in the difference as the compound related to a peak at which the compound candidate is extracted, or calculating proportions of the reference values of the plurality of compound candidates included in each group to confirmation ion ratios in a peak top position of a chromatogram peak at which the plurality of compound candidates is extracted, and determining a compound candidate with a smallest absolute value in a difference between the proportion and 1 as a compound related to a peak at which the compound candidate is extracted,
so as to obtain and determine the compound candidate as a most likely compound related to an extracted peak.

For example, when a plurality of compound candidates in which differences between the retention time information as the compound information and measured retention times are exactly identical to each other exist, similarities between standard mass spectrums and measured mass spectrums are calculated for the plurality of compound candidates, and a compound candidate with a highest similarity may be selected. In such a manner, a peak can be identified as single more likely compound by combining a plurality of different determinations.

The data processing device may further include an identified result organizing unit that automatically deletes, for each group including the plurality of compound candidates related to a single peak, from the plurality of compound candidates, compound candidates other than the compound candidate determined as the most likely compound by the compound candidate determining unit as unnecessary results of identification of the peak. As a result, the analyst can confirm only final results of identification of the peak.

Further, in the data processing device for chromatograph mass spectrometer of the present invention, when the mass-to-charge ratios of quantitative ions and the confirmation ions are stored as the compound information, a likely compound candidate is not extracted for each peak by the compound candidate determining unit. Instead of the extraction, the data processing device may further include a compound communality determining unit that compares, for each group including the plurality of compound candidates grouped by the compound candidate grouping unit and related to a single peak, the mass-to-charge ratios of the quantitative ions and the confirmation ions for peak detection and determines whether any common mass-to-charge ratios exists. At this time, the determination may be made that common mass-to-charge ratios exist in a case where a mass-to-charge ratio of a quantitative ion of a certain compound is a mass-to-charge ratio of a confirmation ion of another compound.

When the compound communality determining unit determines that common mass-to-charge ratios do not exist among the mass-to-charge ratios of the quantitative ions, among the mass-to-charge ratios of the confirmation ions, or between the mass-to-charge ratios of the quantitative ion and the mass-to-charge ratios of the confirmation ions, the compounds that are identical or close to each other just in the retention times exist. Thus, overlapping identifications do not exist but a plurality of compounds actually overlaps.

Further, in the data processing device for chromatograph mass spectrometer of the present invention, when the mass-to-charge ratios of quantitative ions and the confirmation ions and the mass spectrums are stored as the compound information, the data processing device may further include a compound communality determining unit that determines whether, for each group including the plurality of compound candidates grouped by the compound candidate grouping unit and related to a single peak, mass-to-charge ratios of a quantitative ion and a confirmation ion for detecting a peak of a single compound candidate are included in a mass spectrum of another compound candidate. In this case, the compound communality determining unit may determine whether the mass-to-charge ratios of the quantitative ion and the confirmation ion are included not for all the peaks on the mass spectrum of the another compound candidate but for a mass spectrum peak selected based on a ratio of intensity to t a base peak in the mass spectrum. Also in this configuration, similarly to the above configuration, it can be determined that overlapping identifications do not exist but a plurality of compounds actually overlaps.

Further, normally, as for compound candidates that are not determined as being likely, a study is made whether identification on another peak that is not identified and in which the retention time is close is enabled. When the identification on the other peak is enabled, a work for correcting the results of identification of the peak, namely, the relations between peaks and compounds is done. This case is convenient if the results of identification of the peak before correction can be referred to as necessary. Therefore, in the data processing device for chromatograph mass spectrometer of the present invention, when results obtained by grouping in relation to each peak by the compound candidate grouping unit are corrected, the results before correction are enabled to be automatically saved and to be displayed according to a predetermined operation.

### ADVANTAGEOUS EFFECTS OF INVENTION

According to the data processing device for chromatograph mass spectrometer of the present invention, even when overlapping identifications arise by an automatic data processing for identifying a peak on a chromatogram as a certain compound, an analyst does not have to confirm a peak having overlapping identifications. As a result, the analyst can easily confirm the peak having overlapping identifications and compound candidates. Therefore, while time and effort of the analyst is being reduced, namely, efficiently correct compounds related to each peak on the chromatogram can be determined. Further, in the above-described data processing device for chromatograph mass spectrometer according to the first to fourth aspects, since a most likely compound is automatically selected for each peak having overlapping identifications, even if a lot of overlapping identifications arise, appropriate peak identifications can be carried out without placing a heavy burden on the analyst.

### BRIEF DESCRIPTION OF DRAWINGS

Fig. 1 is a schematic configurational diagram of a gas chromatograph mass spectrometer (GC-MS) system according to one embodiment having a data processing device for chromatograph mass spectrometer of the present invention.
Fig. 2 is a flowchart illustrating a procedure of a work and a process for confirming a compound included in a target sample using the GC-MS system according to the present embodiment.
Fig. 3 is an explanatory diagram of a peak identifying process in the GC-MS system according to the present embodiment.
Fig. 4 is a diagram illustrating an example of overlapping identifications of a peak on a chromatogram in a conventional data process.

### DESCRIPTION OF EMBODIMENTS

A gas chromatograph mass spectrometer (GC-MS) system according to one embodiment having a data processing device for chromatograph mass spectrometer of the present invention will be described in detail below with reference to the accompanying drawings.

The GC-MS system according to the present embodiment includes a measuring unit 1 including a gas chromatograph (GC) unit 11 and a mass spectrometer (MS) unit 12, an analog-digital converter (ADC) 13 that digitizes a signal obtained by the measuring unit 1, a data processor 2 that stores and processes data converted by the ADC 13, an analysis controller 3 that controls an operation of the measuring unit 1, a central controller 4 that controls the entire system, and an input unit 5 and a display unit 6 that are user interfaces.

Not illustrated, the GC unit 11 includes a sample vaporizing chamber where a small amount of liquid sample is vaporized, a column that separates a sample component introduced along a flow of a carrier gas in a time direction, and a column oven that adjusts a temperature of the column. Further, the MS unit 12 is, for example, a quadrupolar mass spectrometer, and ionizes a sample component introduced from the GC unit 11 and separates the generated ion according to a mass-to-charge ratio to detect the ion.

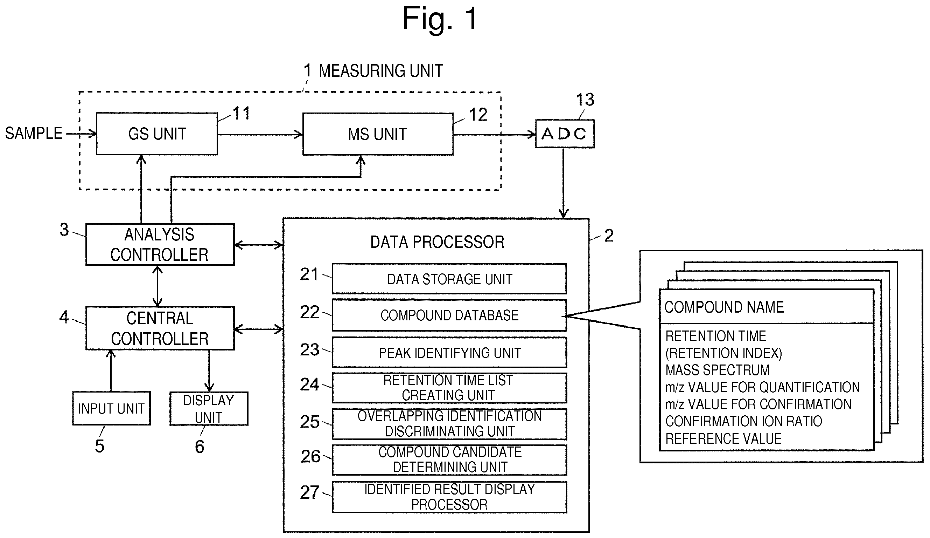

The data processor 2 includes a data storage unit 21, a compound database 22, a peak identifying unit 23, a retention time list creating unit 24, an overlapping identification discriminating unit 25 (the retention time list creating unit 24 and the overlapping identification discriminating unit 25 correspond to an identical peak related compound candidate extracting unit of the present invention), a compound candidate determining unit 26, and an identified result display processor 27 as a function block. As illustrated in Fig. 1, compound information about compounds that are expected or likely to be included in a sample to be measured, namely, compounds to be measured is stored in the compound database 22 in advance. The compound information includes standard retention times (or retention indexes), standard mass spectrums, mass-to-charge ratios of quantitative ions, mass-to-charge ratios of confirmation ions, and confirmation ion ratio reference values. Names of the compounds are related to the compound information.

Note that functions of the data processor 2, the analysis controller 3, and the central controller 4 can be realized by executing dedicated control and processing software installed in a personal computer or a high-performance work station as hardware.

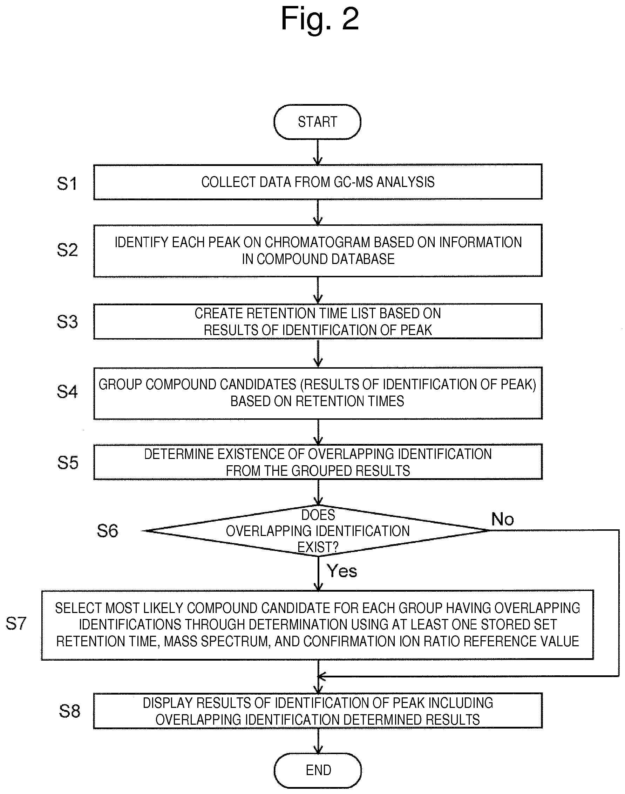

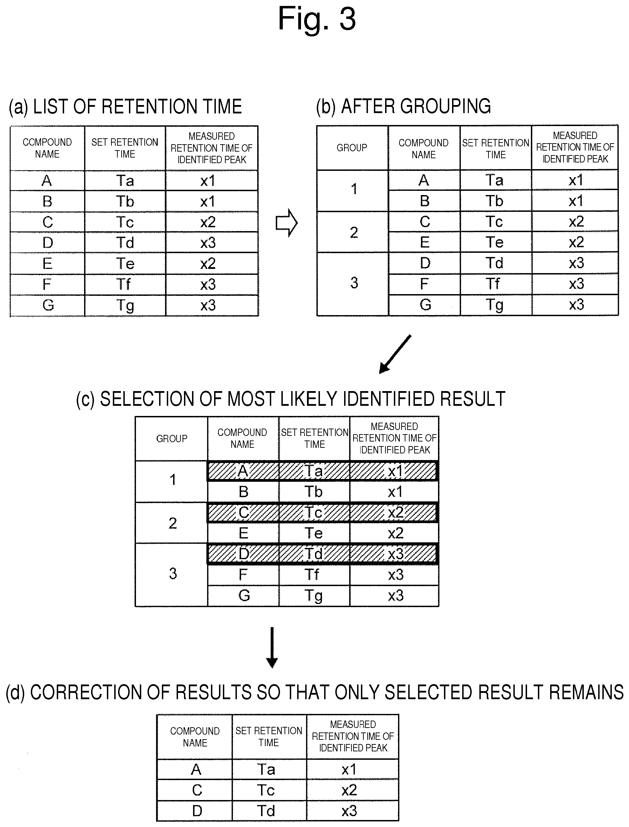

Fig. 2 is a flowchart illustrating a procedure of a work and a process for confirming a compound to be measured included in a target sample using the GC-MS system according to the present embodiment. Fig. 3 is an explanatory diagram of a peak identifying process characteristic in the confirming process.

First, the measuring unit 1 conducts GC-MS analysis on a target sample to collect data (step S1). That is, when an analyst performs a predetermined operation using the input unit 5, the measuring unit 1 conducts the GC-MS analysis on the target sample under control of the analysis controller 3 that receives an instruction from the central controller 4. At this time, the MS unit 12 repeats scanning measurement over a preset mass-to-charge ratio range, and mass spectrum data of the mass-to-charge ratio range is input into the data processor 2 at each one scanning measurement to be stored in the data storage unit 21.

The peak identifying unit 23 then refers to the compound information stored in the compound database 22, and executes a peak identifying process based on the collected data (step S2).

Specifically, the peak identifying unit 23 creates, based on the collected data, mass chromatograms (extracted ion chromatograms) at the mass-to-charge ratio of a quantitative ion and the mass-to-charge ratio of a confirmation ion in the predetermined time range including the retention time for each compound stored in the compound database 22, and detects a peak on the mass chromatogram. As for a certain compound to be measured, a peak top position of a peak on the mass chromatogram at the mass-to-charge ratio of the quantitative ion is used as a measured retention time, and a determination is made whether a difference between the measured retention time and the retention time stored in the compound database 22 (set retention time) is within a predetermined allowable value. When the difference in the retention time is within the allowable value, a determination is further made whether a difference between a confirmation ion ratio calculated from the value of an area of the peak on the mass chromatogram and a confirmation ion ratio reference value is within a predetermined allowable value. When this difference is within the allowable value, the target compound is decided as a compound candidate related to the peak. Note that, as described above, a determination may be made whether a peak is identified as a target compound by determining a similarity of a pattern of the mass spectrum instead of the confirmation ion ratio or in addition to the confirmation ion ratio.

**In** the above-described peak identifying process, a compound stored in the compound database 22 is related as a compound candidate to each peak detected on the mass chromatogram. However, as is obvious, in some cases, a plurality of compound candidates is related to a single peak or a peak to which no compound candidate is related may exist. Further, since not all compounds to be measured are included in the target sample, a compound to be measured that is not related to any peak may exist. Such results of identification of the peak are once saved in the data storage unit 21.

Note that a peak identifying method is not limited to the above described method. For example, peaks are detected according to a deconvolution process on a total ion chromatogram, and compound identification is carried out by using the compound database 22 for each of the peaks so that compound candidates may be extracted. Further, the peak identification is occasionally carried out by using only the retention times without using the mass spectrum information and the confirmation ion ratios.

A process for discriminating overlapping identifications in initial results of identification of the peak saved in the data storage unit 21 and correcting the results of identification of the peak as necessary will be described below.

First, the retention time list creating unit 24 creates a list of measured retention times of identified peaks for all the compounds lined up in the results of identification of the peak (step S3). Fig. 3(a) shows a simple example of the retention time list. The list includes seven compounds (compound candidates) with names A to G, and Ta to Tg represent retention times related to the compounds A to G, respectively, stored in the compound database 22. Symbols x1, x2, and x3 represent measured retention times of the peaks identified as the compounds at a time of the peak identification at step S2.

The overlapping identification discriminating unit 25 then selects two or more compounds in which the measured retention times are identical to each other or a difference between the measured retention times is within a predetermined allowable value from the retention time list. All the compounds lined up in the retention time list are grouped so that the plurality of compounds in which the measured retention times are identical to each other or the difference between the measured retention times is within a predetermined allowable value is combined into one group (step S4). Fig. 3(b) shows results of grouping the compounds listed in the retention time list shown in Fig. 3(a). In this example, seven compounds are divided into three groups.

Since a single group is related to a single peak on the chromatogram, a group including a plurality of compounds means that the peak is likely to have overlapping identifications. On the other hand, when a single group includes only a single compound, the peak does not have overlapping identifications. Therefore, the overlapping identification discriminating unit 25 determines whether a group including a plurality of compounds exists so as to determine whether overlapping identifications exist (steps S5, S6). In the example of Fig. 3(b), since all the groups include two or more compounds, the determination in step S6 is made as Yes and the process goes to step S7. If overlapping identifications do not exist, the process bypasses step S7 from step S6 to go to S8. Note that when a single group includes a plurality of compounds, namely, might have overlapping identifications, it is not clear whether any compound included in the group is a true compound, and thus the compounds included in the group is absolutely compound candidates.

The compound candidate determining unit 26 then executes any one of the following processes for each group having overlapping identifications so as to select a most likely compound candidate (step S7).
(1) Absolute values in differences between the set retention times of the compound candidates and the measured retention times of the identified peak are calculated, and a compound candidate with a smallest value in the group is selected. In group 1 shown in Fig. 3(b), the retention time difference with respect to the compound (compound candidate) A is expressed by ITa - x1l, and the retention time difference with respect to the compound (compound candidates) B is expressed by ITb - x1l. If ITa - x1l < ITb - x1l, the compound A is selected, and if lTa - x1l > ITb - x1l, the compound B is selected.
(2) Similarities in a pattern between standard mass spectrums related to the compound candidates and measured mass spectrums in a peak top position of the identified peak are calculated, and a compound candidate with a largest similarity in the group is selected.
(3) Absolute values in differences between the confirmation ion ratio reference values related to the compound candidates and the confirmation ion ratios obtained from the measured mass chromatograms for the identified peak are calculated, and a compound candidate with a smallest value in the group (namely, the measured confirmation ion ratios is closest to the confirmation ion ratio reference value) is selected.
(4) Ratios of the measured confirmation ion ratios for the identified peak to the confirmation ion ratio reference values related to the compound candidates are calculated, and a compound candidate with a smallest difference (absolute value) between the ratio and 1 is selected. This is, similarly to (3), a method for searching for a compound candidate in which the measured confirmation ion ratio is closest to the confirmation ion ratio reference value.

In the GC-MS system according to the present embodiment, since, as descried above, all the retention times, the standard mass spectrums, and the confirmation ion ratio reference values are stored in the compound database 22 for respective compounds, all the determinations in (1) to (4) can be made. In this case, for example, one compound candidate related to the identified peak may be selected by executing the determining process (1). If the retention times are not stored but the standard mass spectrums are stored in the compound database 22, one compound candidate related to the identified peak may be selected by executing the determining process (2). If both the retention times and the standard mass spectrums are not stored but the confirmation ion ratio reference values are stored in the compound database 22, one compound candidate related to the identified peak may be selected by executing the determining process (3) or (4). That is, the determining processes (1), (2), and (3) or (4) may be preferentially executed in this order.

Fig. 3(c) is a diagram illustrating one example of results after a compound candidate determining process in step S7 is executed on the results of the grouping shown in Fig. 3(b). Herein, ITa - x1l < ITb - x1l, ITc - x2l < ITe - x2l, and ITd - x3l < ITf - x31 < ITg - x31. As a result, the compounds (A, C, D) surrounded by thick lines in Fig. 3(c) are selected in each group.

The identified result display processor 27 clearly presents a compound candidate automatically selected as the most likely compound when overlapping identifications exist, and displays the results of identification of the peak on a screen of the display unit 6 (step S8). As a result, the analyst confirms a peak having overlapping identifications, and can know a most likely compound candidate for the peak.

Note that after a notification of the results of identification of the peak is provided in step S8, only a most likely peak identified result, namely, compound candidate is allowed to remain, and the other results of identification of the peak may be automatically deleted. Fig. 3(d) shows an example where the results other than the most likely peak identified result are deleted from the selected results in Fig. 3(c). As a result, the peak identified result without the overlapping identifications remains as a final result.

Note that after the results of identification of the peak are grouped based on the retention times in step S4, the grouped results are displayed on the screen of the display unit 6, and a subsequent work for determining a most likely peak identified result is not done as the automatic data processing but may be done manually by the analyst. In this case, although a most likely compound candidate has to be determined by the analyst, the process for searching for a peak that is likely to have overlapping identifications, and extracting compound candidates related to the peak is automatically executed. For this reason, a burden on the analyst is less than in a conventional case.

Further, when the most likely compound candidate is selected in step S7, two or more of the determinations in (1), (2), and (3) or (4) may be combined. For example, when a plurality of compound candidates included in a single group are exactly identical to each other in the retention times and thus the compound candidates cannot be limited to one, the determination in (2) or (3) is further made so that one compound candidate may be selected for each group.

Further, in steps S3 and S4, retention indexes may be used instead of retention times.

Further, in the peak identifying process in step S2, when a plurality of compound candidates in which the retention times of the peak are identical to each other or differences between the retention times are less than or equal to a predetermined value exist, actually a plurality of different compounds are detected at the identical or very close retention times, namely, actually the plurality of compounds overlap. Therefore, there may be provided a function for comparing, as for a compound group (namely, a plurality of compound candidates included in a single group) in which a single peak is likely to have overlapping identifications under the criterion of the peak identification, the mass-to-charge ratios of quantitative ions and the mass-to-charge ratios of confirmation ions to be used for creating mass chromatograms, and determining whether any common mass-to-charge ratios exist. At this time, the determination may be made that common mass-to-charge ratios exist in a case where a mass-to-charge ratio of a quantitative ion of a certain compound is a mass-to-charge ratio of a confirmation ion of another compound. As for compounds without a common mass-to-charge ratio between the mass-to-charge ratios of the quantitative ions, between the mass-to-charge ratios of the confirmation ions, or between the mass-to-charge ratios of the quantitative ion and the mass-to-charge ratios of the confirmation ions, these compounds are identical or close to each other just in the retention times. Thus, even if a single peak is seen on the chromatogram, it can be determined that the respective compounds exist in the sample.

Further, instead of the above-described function, there may further be provided a function for determining whether, as for a compound group in which a single peak is likely to have overlapping identifications under the criterion of the peak identification, there is, on a mass spectrum stored in relation to a single compound, a peak of a mass-to-charge ratio of a quantitative ion and a mass-to-charge ratio of a confirmation ion used for creating a mass chromatogram of another compound, for each compound included in the compound group. Note that, at this time, the determination is not made whether there exist all the peaks included in the stored mass spectrums at the mass-to-charge ratios of quantitative ions and confirmation ions, but after a target peak is selected based on a ratio of signal intensity to a base peak at which signal intensity is maximum (for example, the target is only a peak in which the ratio of the signal intensity to the base peak is greater than or equal to 0.2), the determination may be made whether there exists a peak of the mass-to-charge ratios of the quantitative ions and the confirmation ions.

Further, in each group where the results of identification of the peak are obtained by grouping based on the retention times, the correcting work has to be done for compound candidates other than the compound candidate determined as most likely in some cases such that the results of identification of the peak are changed into results of another peak that is close to the identified peak in the retention times. Therefore, there may provide a function for indicating a peak originally identified for a certain compound candidate in display on the chromatogram or saving original results of identification of the peak so as to appropriately select a peak other than the originally identified peaks when the analyst tries to correct the results of identification of the peak.

Further, in the GC-MS system according to the above embodiment, the data processing is executed on the data collected by the scanning measurement, but when mass-to-charge ratios of quantitative ions and confirmation ions are stored in the compound database 22, the SIM measurement may be carried out on the mass-to-charge ratios of the quantitative ions and the confirmation ions to collect the data. In this case, since mass spectrums cannot be created, it is obvious that compound candidates cannot be selected by using the mass spectrums.

Further, in the GC-MS system according to the above embodiment, although a single type quadrupolar mass spectrometer is assumed as the MS unit 12, the MS unit 12 may be a tandem quadrupolar mass spectrometer or a Q-TOF mass spectrometer. In this case, product ion scanning measurement is carried out instead of the scanning measurement, or the multiple reaction monitoring (MRM) is carried out instead of the SIM measurement so as to collect the data.

Further, in the above embodiment, the data processing device for chromatograph mass spectrometer of the present invention is applied to the GC-MS system, but it is obvious that the present invention is applicable to data obtained by LC-MS.

### REFERENCE SIGNS LIST

1... Measuring Unit
11... Gas Chromatograph (GC) Unit
12... Mass Spectrometer (MS) Unit
13... Analog-Digital Converter
2... Data Processor
21... Data Storage Unit
22... Compound Database
23... Peak Identifying Unit
24... Retention Time List Creating Unit
25... Overlapping Identification Discriminating Unit
26... Compound Candidate Determining Unit
27... Identified Result Display Processor
3... Analysis Controller
4... Central Controller
5... Input Unit
6... Display Unit

## Claims

1. A data processing device (2) for chromatography-mass spectrometry that identifies a compound related to a peak detected on a chromatogram created based on data obtained by repeating a measurement which is one of scanning measurement in a predetermined mass-to-charge ratio range, selection ion monitoring (SIM) measurement at the predetermined mass-to-charge ratio, and multiple reaction monitoring (MRM) measurement in a predetermined MRM transition for a target sample using a chromatograph mass spectrometer (1), the data processing device (2) comprising:
a) a compound information storage unit (22) configured to store compound information related to measurement compounds that are expected or likely to be included in the target sample, the compound information including at least one of retention times, retention indexes, mass-to-charge ratios of quantitative ions, mass-to-charge ratios of confirmation ions, confirmation ion ratios, and mass spectrums;
b) a peak identifying unit (23) configured, in respect of each peak in chromatograms created for the measurement compounds based on the data obtained by the measurement using the chromatograph mass spectrometer (1), to perform identification of a peak based on the compound information stored in the compound information storage unit (22) to extract the measurement compounds corresponding to the respective peak as possible compound candidates related to the respective peak;
c) an identical peak related compound candidate extracting unit (24, 25) configured to create a list of measured retention times for the possible compound candidates extracted by the peak identifying unit (23) and extract, from the list, only compound candidates having overlapping identifications in which the measured retention times are identical to each other or a difference between the measured retention times is within a predetermined allowable value, thereby finding one or more peaks having overlapping identifications;
d) a compound candidate grouping unit (25) that groups the compound candidates having overlapping identifications extracted by the identical peak related compound candidate extracting unit (24, 25) in relation to each of the one or more peaks having overlapping identifications found by the identical peak related compound candidate extracting unit (24, 25); and
e) an information output unit (27) that externally outputs information representing the compound candidates having overlapping identifications grouped in relation to each of the one or more peaks having overlapping identifications by the compound candidate grouping unit (25).

2. The data processing device (2) for chromatography-mass spectrometry according to claim 1,
wherein the retention times are stored as the compound information in the compound information storage unit (22),
the data processing device (2) further comprising a compound candidate determining unit (26) configured to compare, for each group including the compound candidates having overlapping identifications grouped by the compound candidate grouping unit (25) and related to a single peak, absolute values in differences between the retention times stored in the compound information storage unit (22) and measured retention times for the compound candidates having overlapping identifications included in each group, and determine a compound candidate with a smallest absolute value in the difference as a most likely compound related to a peak at which the compound candidate is extracted.

3. The data processing device (2) for chromatography-mass spectrometry according to claim 1,
wherein the mass spectrums are stored as the compound information in the compound information storage unit (22),
the data processing device (2) further comprising a compound candidate determining unit (26) configured to calculate, for each group including the compound candidates having overlapping identifications grouped by the compound candidate grouping unit (25) and related to a single peak, similarities between the mass spectrums for the compound candidates having overlapping identifications included in each group and measured mass spectrums in a peak top position of a chromatogram peak at which the compound candidates having overlapping identifications are extracted, and determine a compound candidate with a highest similarity as a most likely compound related to a peak at which the compound candidate is extracted.

4. The data processing device (2) for chromatography-mass spectrometry according to claim 1,
wherein the confirmation ion ratio reference values are stored as the compound information in the compound information storage unit (22),
the data processing device (2) further comprising a compound candidate determining unit (26) configured to calculate, for each group including the compound candidates having overlapping identifications grouped by the compound candidate grouping unit (25) and related to a single peak, absolute values in differences between the reference values of the plurality of the compound candidates included in each group and confirmation ion ratios in a peak top position of a chromatogram peak at which the compound candidates having overlapping identifications are extracted, and determine a compound candidate with a smallest absolute value in the difference as a most likely compound related to a peak at which the compound candidate is extracted.

5. The data processing device (2) for chromatography-mass spectrometry according to claim 1,
wherein the confirmation ion ratio reference values are stored as the compound information in the compound information storage unit (22),
the data processing device (2) further comprising a compound candidate determining unit (26) configured to calculate, for each group including the compound candidates having overlapping identifications grouped by the compound candidate grouping unit (25) and related to a single peak, proportions of the reference values of the compound candidates having overlapping identifications included in each group to confirmation ion ratios in a peak top position of a chromatogram peak at which the compound candidates having overlapping identifications are extracted, and determine a compound candidate with a smallest absolute value in a difference between the proportion and 1 as a most likely compound related to a peak at which the compound candidate is extracted.

6. The data processing device (2) for chromatography-mass spectrometry according to claim 1, further comprising:
a compound candidate determining unit (26) configured to use two or more of:
a first determining process for comparing, for each group including the compound candidates having overlapping identifications grouped by the compound candidate grouping unit (25) and related to a single peak, absolute values in differences between retention times stored in the compound information storage unit (22) and measured retention times for the compound candidates having overlapping identifications included in each group, and determining a compound candidate with a smallest absolute value in the difference as a compound related to a peak at which the compound candidate is extracted;
a second determining process for calculating, for each group including the compound candidates having overlapping identifications grouped by the compound candidate grouping unit (25) and related to a single peak, similarities between mass spectrums for the compound candidates having overlapping identifications included in each group and measured mass spectrums in a peak top position of a chromatogram peak at which the compound candidates having overlapping identifications are extracted, and determining a compound candidate with a highest similarity as a compound related to a peak at which the compound candidate is extracted; and
a third determining process for calculating, for each group including the compound candidates having overlapping identifications grouped by the compound candidate grouping unit (25) and related to a single peak, absolute values for differences between the reference values of the plurality of the compound candidates included in each group and confirmation ion ratios in a peak top position of a chromatogram peak at which the compound candidates having overlapping identifications are extracted, and determining a compound candidate with a smallest absolute value in the difference as the compound related to a peak at which the compound candidate is extracted, or calculating proportions of the reference values of the compound candidates having overlapping identifications included in each group to confirmation ion ratios in a peak top position of a chromatogram peak at which the compound candidates having overlapping identifications are extracted, and determining a compound candidate with a smallest absolute value in a difference between the proportion and 1 as a compound related to a peak at which the compound candidate is extracted,
so as to obtain and determine a compound candidate as a most likely compound related to an extracted peak.

7. The data processing device (2) for chromatography-mass spectrometry according to any one of claims 2 to 6, further comprising an identified result organizing unit that automatically deletes, for each group including the compound candidates having overlapping identifications related to a single peak, from the compound candidates having overlapping identifications, compound candidates other than the compound candidate determined as the most likely compound by the compound candidate determining unit (26) as unnecessary results of identification of the peak.

8. The data processing device (2) for chromatography-mass spectrometry according to claim 1,
wherein the mass-to-charge ratios of the quantitative ions and the confirmation ions are stored as the compound information in the compound information storage unit (22), the data processing device (2) further comprising:
a compound communality determining unit that compares, for each group including the compound candidates having overlapping identifications grouped by the compound candidate grouping unit (25) and related to a single peak, the mass-to-charge ratios of the quantitative ions and the confirmation ions for peak detection and determines whether any common mass-to-charge ratios exists.

9. The data processing device (2) for chromatography-mass spectrometry according to claim 1,
wherein the mass-to-charge ratios of the quantitative ions and the confirmation ions and the mass spectrums are stored as the compound information in the compound information storage unit (22), the data processing device (2) further comprising:
a compound communality determining unit that determines whether, for each group including the compound candidates having overlapping identifications grouped by the compound candidate grouping unit and related to a single peak, mass-to-charge ratios of a quantitative ion and a confirmation ion for detecting a peak of a single compound candidate are included in a mass spectrum of another compound candidate.

10. The data processing device (2) for chromatography-mass spectrometry according to claim 9, wherein the compound communality determining unit determines whether the mass-to-charge ratios of the quantitative ion and the confirmation ion are included for a mass spectrum peak selected based on a ratio of intensity to a base peak are included in the mass spectrum of the another compound candidate.

11. The data processing device (2) for chromatography-mass spectrometry according to claim 1, wherein when results obtained by grouping in relation to each of the one or more peaks having overlapping identifications by the compound candidate grouping unit (25) are corrected, the results before correction are enabled to be automatically saved and to be displayed according to a predetermined operation.

## Patentansprüche

1. Datenverarbeitungsvorrichtung (2) für Chromatographie-Massenspektrometrie, welche eine Verbindung im Zusammenhang mit einem auf einem Chromatogramm detektierten Peak basierend auf Daten detektiert, die durch Wiederholen einer Messung, welche eine aus einer Scan-Messung in einem vorbestimmten Masse-zu-Ladungs-Verhältnisbereich, einer Auswahlionenüberwachungs- (SIM-) Messung im vorbestimmten Masse-zu-Ladungs-Verhältnisbereich und einer Mehrfachreaktionsüberwachungs- (MRM-) Messung bei einem vorbestimmten MRM-Übergang ist, für eine Zielprobe unter Verwendung eines Chromatographie-Massenspektrometers (1) erhalten werden, wobei die Datenverarbeitungsvorrichtung (2) Folgendes umfasst:
a) eine Verbindungsinformationsspeichereinheit (22), die konfiguriert ist, um Verbindungsinformationen in Bezug auf Messverbindungen, die erwartungsgemäß oder wahrscheinlich in der Zielprobe umfasst sind, zu speichern, wobei die Verbindunginformationen zumindest eines aus Retentionszeiten, Retentionsindizes, Masse-zu-Ladungs-Verhältnissen von quantitativen Ionen, Masse-zu-Ladungs-Verhältnissen von Bestätigungsionen, Bestätigungsionenverhältnisse und Massenspektren umfasst;
b) eine Peakidentifizierungseinheit (23), die dazu ausgelegt ist, in Bezug auf jeden Peak in Chromatogrammen, die für die Messverbindungen basierend auf den durch die Messung unter Verwendung des Chromatographie-Massenspektrometers (1) erhaltenen Daten erzeugt wurden, eine Identifizierung eines Peaks basierend auf den in der Verbindungsinformationsspeichereinheit (22) gespeicherten Verbindungsinformationen durchzuführen, um die dem jeweiligen Peak entsprechenden Messverbindungen als mögliche Verbindungskandidaten in Bezug auf den jeweiligen Peak zu extrahieren;
c) eine mit identischen Peaks zusammenhängende Verbindungskandidat-Extraktionseinheit (24, 25), die dazu ausgelegt ist, eine Liste gemessener Retentionszeiten für die möglichen Verbindungskandidaten, die durch die Peakidentifizierungseinheit (23) extrahiert wurden, zu erzeugen und aus der Liste nur Verbindungskandidaten mit überlappenden Identifikationen zu extrahieren, bei denen die gemessenen Retentionszeiten miteinander identisch sind oder eine Differenz zwischen den gemessenen Retentionszeiten innerhalb eines vorbestimmten zulässigen Werts liegt, wodurch ein oder mehrere Peaks mit überlappenden Identifikationen gefunden werden;
d) eine Verbindungskandidatengruppierungseinheit (25), welche die Verbindungskandidaten mit überlappenden Identifikationen, die durch die mit identischen Peaks zusammenhängende Verbindungskandidat-Extraktionseinheit (24, 25) extrahiert wurden, in Bezug auf jeden aus dem einen oder den mehreren Peaks mit überlappenden Identifikationen, die durch die mit identischen Peaks zusammenhängende Verbindungskandidat-Extraktionseinheit (24, 25) gefunden wurden, gruppiert; und
e) eine Informationsausgabeeinheit (27), die Informationen, welche die Verbindungskandidaten mit überlappenden Identifikationen, die in Bezug auf jeden aus dem einen oder den mehreren Peaks mit überlappenden Identifikationen durch die Verbindungskandidatengruppierungseinheit (25) gruppiert wurden, darstellen, extern ausgibt.

2. Datenverarbeitungsvorrichtung (2) für Chromatographie-Massenspektrometrie nach Anspruch 1,
wobei die Retentionszeiten als Verbindungsinformationen in der Verbindungsinformationsspeichereinheit (22) gespeichert sind,
wobei die Datenverarbeitungsvorrichtung (2) ferner eine Verbindungskandidatenbestimmungseinheit (26) umfasst, die konfiguriert ist, um für jede Gruppe, welche die durch die Verbindungskandidatengruppierungseinheit (25) gruppierten Verbindungskandidaten mit überlappenden Identifikationen umfasst, und in Bezug auf einen einzelnen Peak Absolutwerte von Differenzen zwischen den in der Verbindungsinformationsspeichereinheit (22) gespeicherten Retentionszeiten und für die in jeder Gruppe umfassten Verbindungskandidaten mit überlappenden Identifikationen gemessenen Retentionszeiten zu vergleichen und einen Verbindungskandidaten mit einem kleinsten Absolutwert in der Differenz als wahrscheinlichste Verbindung in Bezug auf einen Peak, bei dem der Verbindungskandidat extrahiert wird, zu bestimmen.

3. Datenverarbeitungsvorrichtung (2) für Chromatographie-Massenspektrometrie nach Anspruch 1,
wobei die Massenspektren als Verbindungsinformationen in der Verbindungsinformationsspeichereinheit (22) gespeichert sind,
wobei die Datenverarbeitungsvorrichtung (2) ferner eine Verbindungskandidatenbestimmungseinheit (26) umfasst, die konfiguriert ist, um für jede Gruppe, welche die durch die Verbindungskandidatengruppierungseinheit (25) gruppierten Verbindungskandidaten mit überlappenden Identifikationen umfasst, und in Bezug auf einen einzelnen Peak Ähnlichkeiten zwischen den Massenspektren für die in jeder Gruppe umfassten Verbindungskandidaten mit überlappenden Identifikationen und den gemessenen Massenspektren in einer oberen Peakposition eines Chromatogramm-Peaks, bei dem die Verbindungskandidaten mit überlappenden Identifikationen extrahiert werden, zu berechnen und einen Verbindungskandidaten mit einer größten Ähnlichkeit als wahrscheinlichste Verbindung in Bezug auf einen Peak, bei dem der Verbindungskandidat extrahiert wird, zu bestimmen.

4. Datenverarbeitungsvorrichtung (2) für Chromatographie-Massenspektrometrie nach Anspruch 1,
wobei die Bestätigungsionenverhältnisreferenzwerte als Verbindungsinformationen in der Verbindungsinformationsspeichereinheit (22) gespeichert sind;
wobei die Datenverarbeitungsvorrichtung (2) ferner eine Verbindungskandidatenbestimmungseinheit (26) umfasst, die konfiguriert ist, um für jede Gruppe, welche die durch die Verbindungskandidatengruppierungseinheit (25) gruppierten Verbindungskandidaten mit überlappenden Identifikationen umfasst, und in Bezug auf einen einzelnen Peak Absolutwerte von Differenzen zwischen den Referenzwerten der Vielzahl von in jeder Gruppe umfassten Verbindungskandidaten und Bestätigungsionenverhältnissen in einer oberen Peakposition eines Chromatogramm-Peaks, bei dem die Verbindungskandidaten mit überlappenden Identifikationen extrahiert werden, zu berechnen und einen Verbindungskandidaten mit einem kleinsten Absolutwert der Differenz als wahrscheinlichste Verbindung in Bezug auf einen Peak, bei dem der Verbindungskandidat extrahiert wird, zu bestimmen.

5. Datenverarbeitungsvorrichtung (2) für Chromatographie-Massenspektrometrie nach Anspruch 1,
wobei die Bestätigungsionenverhältnisreferenzwerte als Verbindungsinformationen in der Verbindungsinformationsspeichereinheit (22) gespeichert sind,
wobei die Datenverarbeitungsvorrichtung (2) ferner eine Verbindungskandidatenbestimmungseinheit (26) umfasst, die konfiguriert ist, um für jede Gruppe, welche die durch die Verbindungskandidatengruppierungseinheit (25) gruppierten Verbindungskandidaten mit überlappenden Identifikationen umfasst, und in Bezug auf einen einzelnen Peak Proportionen der Referenzwerte der in jeder Gruppe umfassten Verbindungskandidaten mit überlappenden Identifikationen zu Bestätigungsionenverhältnissen in einer oberen Peakposition eines Chromatogramm-Peaks, bei dem die Verbindungskandidaten mit überlappenden Identifikationen extrahiert werden, zu berechnen und einen Verbindungskandidaten mit einem kleinsten Absolutwert der Differenz zwischen der Proportion und 1 als wahrscheinlichste Verbindung in Bezug auf einen Peak, bei dem der Verbindungskandidat extrahiert wird, zu bestimmen.

6. Datenverarbeitungsvorrichtung (2) für Chromatographie-Massenspektrometrie nach Anspruch 1, ferner umfassend:
eine Verbindungskandidatenbestimmungseinheit (26), die dazu ausgelegt ist, zwei oder mehrere aus folgenden zu verwenden:
einen ersten Bestimmungsvorgang zum Vergleichen, für jede Gruppe, welche die durch die Verbindungskandidatengruppierungseinheit (25) gruppierten Verbindungskandidaten mit überlappenden Identifikationen umfasst, und in Bezug auf einen einzelnen Peak, von Absolutwerten von Differenzen zwischen den in der Verbindungsinformationsspeichereinheit (22) gespeicherten Retentionszeiten und den für die in jeder Gruppe umfassten Verbindungskandidaten mit überlappenden Identifikationen gemessenen Retentionszeiten und Bestimmen eines Verbindungskandidaten mit einem kleinsten Absolutwert in der Differenz als Verbindung in Bezug auf einen Peak, bei dem der Verbindungskandidat extrahiert wird;
einen zweiten Bestimmungsvorgang zum Berechnen, für jede Gruppe, welche die durch die Verbindungskandidatengruppierungseinheit (25) gruppierten Verbindungskandidaten mit überlappenden Identifikationen umfasst, und in Bezug auf einen einzelnen Peak, von Ähnlichkeiten zwischen Massenspektren für die in jeder Gruppe umfassten Verbindungskandidaten mit überlappenden Identifikationen und gemessenen Massenspektren in einer oberen Peakposition eines Chromatogramm-Peaks, bei dem die Verbindungskandidaten mit überlappenden Identifikationen extrahiert werden, und Bestimmen eines Verbindungskandidaten mit einer größten Ähnlichkeit als Verbindung in Bezug auf einen Peak, bei dem der Verbindungskandidat extrahiert wird; und
einen dritten Bestimmungsvorgang zum Berechnen, für jede Gruppe, welche die durch die Verbindungskandidatengruppierungseinheit (25) gruppierten Verbindungskandidaten mit überlappenden Identifikationen umfasst, und in Bezug auf einen einzelnen Peak, von Absolutwerten für Differenzen zwischen den Referenzwerten der Vielzahl von in jeder Gruppe umfassten Verbindungskandidaten und Bestätigungsionenverhältnissen in einer oberen Peakposition eines Chromatogramm-Peaks, bei dem die Verbindungskandidaten mit überlappenden Identifikationen extrahiert werden, und Bestimmen eines Verbindungskandidaten mit einem kleinsten Absolutwert der Differenz als Verbindung in Bezug auf einen Peak, bei dem der Verbindungskandidat extrahiert wird, oder Berechnen von Proportionen der Referenzwerte der in jeder Gruppe umfassten Verbindungskandidaten mit überlappenden Identifikationen zu Bestätigungsionenverhältnissen in einer oberen Peakposition eines Chromatogramm-Peaks, bei dem die Verbindungskandidaten mit überlappenden Identifikationen extrahiert werden, und Bestimmen eines Verbindungskandidaten mit einem kleinsten Absolutwert der Differenz zwischen der Proportion und 1 als Verbindung in Bezug auf einen Peak, bei dem der Verbindungskandidat extrahiert wird,
um einen Verbindungskandidaten als wahrscheinliche Verbindung in Bezug auf einen extrahierten Peak zu erhalten und zu bestimmen.

7. Datenverarbeitungsvorrichtung (2) für Chromatographie-Massenspektrometrie nach einem der Ansprüche 2 bis 6, ferner umfassend eine Identifizierte-Ergebnisse-Organisationseinheit, welche für jede Gruppe, die Verbindungskandidaten mit überlappenden Identifikationen in Bezug auf einen einzelnen Peak umfasst, andere Verbindungskandidaten als die, die durch die Verbindungskandidatenbestimmungseinheit (26) als wahrscheinlichste Verbindung bestimmt wurden, automatisch als nicht notwendige Peakidentifizierungsergebnisse aus den Verbindungskandidaten mit überlappenden Identifikationen löscht.

8. Datenverarbeitungsvorrichtung (2) für Chromatographie-Massenspektrometrie nach Anspruch 1,
wobei die Masse-zu-Ladungs-Verhältnisse der quantitativen Ionen und der Bestätigungsionen als Verbindungsinformationen in der Verbindungsinformationsspeichereinheit (22) gespeichert sind, wobei die Datenverarbeitungsvorrichtung (2) ferner Folgendes umfasst:
eine Verbindungsgemeinsamkeitsbestimmungseinheit, die für jede Gruppe, welche die durch die Verbindungskandidatengruppierungseinheit (25) gruppierten Verbindungskandidaten mit überlappenden Identifikationen umfasst, und in Bezug auf einen einzelnen Peak die Masse-zu-Ladungs-Verhältnisse der quantitativen Ionen und der Bestätigungsionen zur Peak-Detektion vergleicht und bestimmt, ob gemeinsame Masse-zu-Ladungs-Verhältnisse vorliegen.

9. Datenverarbeitungsvorrichtung (2) für Chromatographie-Massenspektrometrie nach Anspruch 1,
wobei die Masse-zu-Ladungs-Verhältnisse der quantitativen Ionen und der Bestätigungsionen sowie die Massenspektren als Verbindungsinformationen in der Verbindungsinformationsspeichereinheit (22) gespeichert sind, wobei die Datenverarbeitungsvorrichtung (2) ferner Folgendes umfasst:
eine Verbindungsgemeinsamkeitsbestimmungseinheit, die für jede Gruppe, welche die durch die Verbindungskandidatengruppierungseinheit gruppierten Verbindungskandidaten mit überlappenden Identifikationen umfasst, und in Bezug auf einen einzelnen Peak bestimmt, ob die Masse-zu-Ladungs-Verhältnisse eines quantitativen Ions und eines Bestätigungsions zum Detektieren eines Peaks eines einzelnen Verbindungskandidaten in einem Massenspektrum eines anderen Verbindungskandidaten umfasst sind.

10. Datenverarbeitungsvorrichtung (2) für Chromatographie-Massenspektrometrie nach Anspruch 9, wobei die Verbindungsgemeinsamkeitsbestimmungseinheit bestimmt, ob die Masse-zu-Ladungs-Verhältnisse des quantitativen Ions und des Bestätigungsions für einen Massenspektrumspeak, der basierend auf einem Verhältnis von Intensität zu einem Basispeak ausgewählt ist, in dem Massenspektrum eines anderen Verbindungskandidaten umfasst sind.

11. Datenverarbeitungsvorrichtung (2) für Chromatographie-Massenspektrometrie nach Anspruch 1, wobei, wenn Ergebnisse, die durch Gruppieren durch die Verbindungskandidatengruppierungseinheit (25) in Bezug auf jeden aus dem einen oder den mehreren Peaks mit überlappenden Identifikationen erhalten wurden, korrigiert werden, vor dem Korrigieren möglich ist, dass die Ergebnisse automatisch gespeichert und entsprechend einem vorbestimmten Vorgang angezeigt werden.

## Revendications

1. Dispositif de traitement de données (2) pour spectrométrie de masse par chromatographie qui identifie un composé lié à un pic détecté sur un chromatogramme créé sur la base de données obtenues en répétant une mesure qui est une certaine parmi une mesure de balayage dans une plage de rapport masse sur charge prédéterminée, une mesure de surveillance d'ions de sélection (SIM) au rapport masse sur charge prédéterminé, et une mesure de surveillance de réactions multiples (MRM) dans une transition de MRM prédéterminée pour un échantillon cible en utilisant un spectromètre de masse de chromatographie (1), le dispositif de traitement de données (2) comprenant :
a) une unité de stockage d'informations de composés (22) configurée pour stocker des informations de composés relatives à des composés de mesure qui sont attendus ou susceptibles d'être inclus dans l'échantillon cible, les informations de composés comprenant au moins un certain parmi des temps de rétention, des indices de rétention, des rapports masse sur charge d'ions quantitatifs, des rapports masse sur charge d'ions de confirmation, des rapports d'ions de confirmation et des spectres de masse ;
b) une unité d'identification de pic (23) configurée, par rapport à chaque pic dans des chromatogrammes créés pour les composés de mesure sur la base des données obtenues par la mesure en utilisant le spectromètre de masse de chromatographie (1), pour effectuer l'identification d'un pic sur la base des informations de composés stockées dans l'unité de stockage d'informations de composés (22) afin d'extraire les composés de mesure correspondant au pic respectif en tant que composés candidats possibles relatifs au pic respectif ;
c) une unité d'extraction de composés candidats relatifs à un pic identiques (24, 25) configurée pour créer une liste de temps de rétention mesurés pour les composés candidats possibles extraits par l'unité d'identification de pic (23) et extraire, de la liste, uniquement les composés candidats présentant des identifications se chevauchant dans lesquelles les temps de rétention mesurés sont identiques les uns aux autres ou une différence entre les temps de rétention mesurés est à l'intérieur d'une valeur admissible prédéterminée, en trouvant ainsi un ou plusieurs pics présentant des identifications se chevauchant ;
d) une unité de regroupement de composés candidats (25) qui regroupe les composés candidats présentant des identifications se chevauchant extraites par l'unité d'extraction de composés candidats relatifs à un pic identiques (24, 25) par rapport à chacun des un ou plusieurs pics présentant des identifications se chevauchant trouvées par l'unité d'extraction de composés candidats relatifs à un pic identiques (24, 25) ; et
e) une unité de sortie d'informations (27) qui délivre en sortie de manière externe des informations représentant les composés candidats présentant des identifications se chevauchant regroupés par rapport à chacun des un ou plusieurs pics présentant des identifications se chevauchant par l'unité de regroupement de composés candidats (25).

2. Dispositif de traitement de données (2) pour spectrométrie de masse par chromatographie selon la revendication 1,
dans lequel les temps de rétention sont stockés en tant qu'informations de composés dans l'unité de stockage d'informations de composés (22),
le dispositif de traitement de données (2) comprenant en outre une unité de détermination de composés candidats (26) configurée pour comparer, pour chaque groupe incluant les composés candidats présentant des identifications se chevauchant regroupés par l'unité de regroupement de composés candidats (25) et relatifs à un pic unique, des valeurs absolues de différences entre les temps de rétention stockés dans l'unité de stockage d'informations de composés (22) et des temps de rétention mesurés pour les composés candidats présentant des identifications se chevauchant inclus dans chaque groupe, et pour déterminer un composé candidat avec une valeur absolue la plus faible dans la différence en tant que composé le plus probable relatif à un pic au niveau duquel le composé candidat est extrait.

3. Dispositif de traitement de données (2) pour spectrométrie de masse par chromatographie selon la revendication 1,
dans lequel les spectres de masse sont stockés en tant qu'informations de composés dans l'unité de stockage d'informations de composés (22),
le dispositif de traitement de données (2) comprenant en outre une unité de détermination de composés candidats (26) configurée pour calculer, pour chaque groupe incluant les composés candidats présentant des identifications se chevauchant regroupés par l'unité de regroupement de composés candidats (25) et relatifs à un pic unique, des similitudes entre les spectres de masse pour les composés candidats présentant des identifications se chevauchant inclus dans chaque groupe et des spectres de masse mesurés dans une position de sommet de pic d'un pic de chromatogramme au niveau duquel les composés candidats présentant des identifications se chevauchant sont extraits, et pour déterminer un composé candidat avec une similitude la plus élevée en tant que composé le plus probable relatif à un pic au niveau duquel le composé candidat est extrait.

4. Dispositif de traitement de données (2) pour spectrométrie de masse par chromatographie selon la revendication 1,
dans lequel les valeurs de référence de rapport d'ions de confirmation sont stockées en tant qu'informations de composés dans l'unité de stockage d'informations de composés (22),
le dispositif de traitement de données (2) comprenant en outre une unité de détermination de composés candidats (26) configurée pour calculer, pour chaque groupe incluant les composés candidats présentant des identifications se chevauchant regroupés par l'unité de regroupement de composés candidats (25) et relatifs à un pic unique, des valeurs absolues de différences entre les valeurs de référence de la pluralité des composés candidats inclus dans chaque groupe et des rapports d'ions de confirmation dans une position de sommet de pic d'un pic de chromatogramme au niveau duquel les composés candidats présentant des identifications se chevauchant sont extraits, et pour déterminer un composé candidat avec une valeur absolue la plus faible dans la différence en tant que composé le plus probable relatif à un pic au niveau duquel le composé candidat est extrait.

5. Dispositif de traitement de données (2) pour spectrométrie de masse par chromatographie selon la revendication 1,
dans lequel les valeurs de référence de rapport d'ions de confirmation sont stockées en tant qu'informations de composés dans l'unité de stockage d'informations de composés (22),
le dispositif de traitement de données (2) comprenant en outre une unité de détermination de composés candidats (26) configurée pour calculer, pour chaque groupe incluant les composés candidats présentant des identifications se chevauchant regroupés par l'unité de regroupement de composés candidats (25) et relatifs à un pic unique, des proportions des valeurs de référence des composés candidats présentant des identifications se chevauchant inclus dans chaque groupe par rapport à des rapports d'ions de confirmation dans une position de sommet de pic d'un pic de chromatogramme au niveau duquel les composés candidats présentant des identifications se chevauchant sont extraits, et pour déterminer un composé candidat avec une valeur absolue la plus faible dans une différence entre la proportion et 1 en tant que composé le plus probable relatif à un pic au niveau duquel le composé candidat est extrait.

6. Dispositif de traitement de données (2) pour spectrométrie de masse par chromatographie selon la revendication 1, comprenant en outre :
une unité de détermination de composés candidats (26) configurée pour utiliser deux ou plus parmi :
un premier processus de détermination pour comparer, pour chaque groupe comprenant les composés candidats présentant des identifications se chevauchant regroupés par l'unité de regroupement de composés candidats (25) et relatifs à un pic unique, des valeurs absolues de différences entre des temps de rétention stockés dans l'unité de stockage d'informations de composés (22) et des temps de rétention mesurés pour les composés candidats présentant des identifications se chevauchant inclus dans chaque groupe, et déterminer un composé candidat présentant une valeur absolue la plus petite de la différence en tant que composé relatif à un pic au niveau duquel le composé candidat est extrait ;
un second processus de détermination pour calculer, pour chaque groupe incluant les composés candidats présentant des identifications se chevauchant regroupés par l'unité de regroupement de composés candidats (25) et relatifs à un pic unique, des similitudes entre des spectres de masse pour les composés candidats présentant des identifications se chevauchant inclus dans chaque groupe et des spectres de masse mesurés dans une position de sommet de pic d'un pic de chromatogramme au niveau duquel les composés candidats présentant des identifications se chevauchant sont extraits, et pour déterminer un composé candidat avec une similitude la plus élevée en tant que composé relatif à un pic au niveau duquel le composé candidat est extrait ; et
un troisième processus de détermination pour calculer, pour chaque groupe incluant les composés candidats présentant des identifications se chevauchant regroupés par l'unité de regroupement de composés candidats (25) et relatifs à un pic unique, des valeurs absolues pour des différences entre les valeurs de référence de la pluralité des composés candidats inclus dans chaque groupe et des rapports d'ions de confirmation dans une position de sommet de pic d'un pic de chromatogramme au niveau duquel les composés candidats présentant des identifications se chevauchant sont extraits, et déterminer un composé candidat avec une valeur absolue la plus faible dans la différence en tant que composé relatif à un pic au niveau duquel le composé candidat est extrait, ou calculer des proportions des valeurs de référence des composés candidats présentant des identifications se chevauchant inclus dans chaque groupe par rapport à des rapports d'ions de confirmation dans une position de sommet de pic d'un pic de chromatogramme au niveau duquel les composés candidats présentant des identifications se chevauchant sont extraits, et déterminer un composé candidat avec une valeur absolue la plus faible dans une différence entre la proportion et 1 en tant que composé relatif à un pic au niveau duquel le composé candidat est extrait,
de manière à obtenir et à déterminer un composé candidat comme un composé le plus probable relatif à un pic extrait.

7. Dispositif de traitement de données (2) pour spectrométrie de masse par chromatographie selon l'une quelconque des revendications 2 à 6, comprenant en outre une unité d'organisation de résultat identifié qui supprime automatiquement, pour chaque groupe comprenant les candidats composés présentant des identifications se chevauchant relatifs à un pic unique, des candidats composés présentant des identifications se chevauchant, des candidats composés autres que le candidat composé déterminés comme le composé le plus probable par l'unité de détermination de candidat composé (26) en tant que résultats inutiles d'identification du pic.

8. Dispositif de traitement de données (2) pour spectrométrie de masse par chromatographie selon la revendication 1,
dans lequel les rapports masse sur charge des ions quantitatifs et des ions de confirmation sont stockés en tant qu'informations de composés dans l'unité de stockage d'informations de composés (22), le dispositif de traitement de données (2) comprenant en outre :
une unité de détermination de communauté de composés qui compare, pour chaque groupe incluant les composés candidats présentant des identifications se chevauchant regroupés par l'unité de regroupement de composés candidats (25) et relatifs à un pic unique, les rapports masse sur charge des ions quantitatifs et des ions de confirmation pour une détection de pic et détermine s'il existe des rapports masse sur charge communs.

9. Dispositif de traitement de données (2) pour spectrométrie de masse par chromatographie selon la revendication 1,
dans lequel les rapports masse sur charge des ions quantitatifs et des ions de confirmation et des spectres de masse sont stockés en tant qu'informations de composés dans l'unité de stockage d'informations de composés (22), le dispositif de traitement de données (2) comprenant en outre :
une unité de détermination de communauté de composés qui détermine si, pour chaque groupe comprenant les composés candidats présentant des identifications se chevauchant regroupés par l'unité de regroupement de composés candidats et relatifs à un pic unique, des rapports masse sur charge d'un ion quantitatif et d'un ion de confirmation pour détecter un pic d'un composé candidat unique sont inclus dans un spectre de masse d'un autre composé candidat.

10. Dispositif de traitement de données (2) pour spectrométrie de masse par chromatographie selon la revendication 9, dans lequel l'unité de détermination de communauté de composés détermine si les rapports masse sur charge de l'ion quantitatif et de l'ion de confirmation sont inclus pour un pic de spectre de masse sélectionné sur la base d'un rapport d'intensité sur un pic de base sont inclus dans le spectre de masse de l'autre composé candidat.

11. Dispositif de traitement de données (2) pour spectrométrie de masse par chromatographie selon la revendication 1, dans lequel lorsque des résultats obtenus par regroupement par rapport à chacun des un ou plusieurs pics présentant des identifications se chevauchant par l'unité de regroupement de composés candidats (25) sont corrigés, les résultats avant correction sont activés pour être sauvegardés automatiquement et pour être affichés selon une opération prédéterminée.
